# EUROPÄISCHE PATENTSCHRIFT

(11) **EP 2 649 407 B1**
(45) Veröffentlichungstag und Bekanntmachung des Hinweises auf die Patenterteilung: **30.08.2017**
(21) Anmeldenummer: 11763646.4
(22) Anmeldetag: 28.09.2011
(51) Int. Cl.: G01B 7/28, G01B 7/06, B22D 11/16, B22D 11/18

(54) **VERFAHREN ZUR BESTIMMUNG DES HÖHENPROFILS EINER SCHMELZE**
METHOD FOR DETERMINING THE HEIGHT PROFILE OF A MELT
PROCÉDÉ POUR DÉTERMINER LE PROFIL DE HAUTEUR D'UNE MATIÈRE FONDUE

(30) Priorität: 06.12.2010 DE 102010062446
(43) Veröffentlichungstag der Anmeldung: 16.10.2013
(73) Patentinhaber: SMS group GmbH, 40237 Düsseldorf (DE)
(72) Erfinder: SCHWEDMANN, Johannes, 47057 Duisburg (DE); WANS, Jochen, 40667 Meerbusch (DE); JÜRGENS, Robert, 42855 Remscheid (DE)
(74) Vertreter: Klüppel, Walter
(86) Internationale Anmeldenummer: PCT/EP2011/066811
(87) Internationale Veröffentlichungsnummer: WO 2012/076208

(56) Entgegenhaltungen:
- EP-A2- 0 150 670
- WO-A1-2010/069591
- GB-A- 2 021 782

## Beschreibung

### TECHNISCHES GEBIET

Die vorliegende Erfindung betrifft ein Verfahren und eine Vorrichtung zur Bestimmung des Höhenprofils einer Schmelze.

### TECHNISCHER HINTERGRUND

Beim Gießen metallischer Schmelzen beispielsweise auf einem umlaufenden Transportband, wie bei der Belt Casting Technology (BCT), genauso wie beim Gießen metallischer Schmelzen auf andere Erstarrungsbereiche ist es ein Ziel, die Oberfläche der metallischen Schmelze bzw. des teilerstarrten Metalls möglichst gleichmäßig auszurichten, um eine möglichst hohe Qualität des gegossenen Vorbandes oder der gegossenen Bramme zu erreichen.

Zur Bestimmung dieses Oberflächenprofils wurden bislang separate Sensoren verwendet, welche die Messung beispielsweise über durchstrahlende Verfahren mittels Röntgenstrahlung oder Radioaktivität oder über laserbasierte Verfahren durchführen. Bei Lasermessungen können Verfälschungen der Messergebnisse aufgrund der unterschiedlichen Wärmetönung der heißen Oberflächen der Metallschmelze bzw. des teilerstarrten Metalls auftreten. Bei den durchstrahlenden Verfahren sind erhöhte Sicherheitsvorkehrungen notwendig, um eine Gefährdung der sich in diesem Bereich aufhaltenden Personen zu verhindern.

Weiterhin ist es bekannt, das Niveau eines Schmelzespiegels in einer Gießform bzw. einem metallurgischen Gefäß mittels eines Sensors, der auf dem Prinzip der Wirbelstrommessung ("eddy current measurement") basiert, durchzuführen, wie beispielsweise mittels des "Easy Cast LB 6780 Sensors" von Berthold Technologies GmbH & Co. KG.

Auch aus der DE 34 23 977 A1 ist ein Verfahren und eine Vorrichtung zur berührungslosen Messung der erstarrten Randschicht eines Gussteils aus Metall mit nicht-erstarrtem Innenkern bekannt, wobei die Messung mittels eines separaten Sensors durchgeführt wird, der eine Wirbelstrommessung in dem Gussteil vornimmt.

Weiterhin ist bekannt, dass beim horizontalen Gießen von Metallen, beispielsweise beim Bandgießen (Belt Casting Technology, früher auch Direct Strip Casting), das schmelzflüssige Metall über ein metallurgisches Gefäß horizontal auf ein Transportband und zwischen zwei seitliche Begrenzungen aufgegeben wird. Typischerweise ist verfahrensbedingt die Ausgabebreite der Schmelze aus dem metallurgischen Gefäß geringer als die eigentlich gewünschte Gussbreite zwischen den beiden seitlichen Begrenzungen. Entsprechend muss die Schmelze von dem Ausgabepunkt aus dem metallurgischen Gefäß auf die gewünschte Gießbreite strömen. Dieses Strömen wird durch das Anlegen eines elektromagnetischen Rühr- bzw. Förderfeldes dahingehend unterstützt, dass ein entsprechend ausgerichtetes Magnetfeld erzeugt wird, welches je nach Ausprägung einzelne Bereiche oder Schichten der Schmelze abbremsen oder in die gewünschte Richtung beschleunigen kann.

Aus der WO 00/63457 A2 ist ein Verfahren und eine Vorrichtung zum Erstellen eines Metallbandes bekannt, bei welchem durch das Einprägen eines senkrecht zu der Transportrichtung des Transportbandes stehendes Magnetfeld Schichten, die sich langsamer als das Transportband bewegen, durch das angelegte Magnetfeld beschleunigt werden und Schichten, die sich schneller als das Transportband bewegen, abgebremst werden. Hierdurch soll eine Vergleichmäßigung der Transportgeschwindigkeit der Schmelze erreicht werden. Weiterhin kann durch das Anlegen eines Wanderfeldes auch das Fließen der Schmelze unterstützt werden.

Aus der WO 2010/069591 A1 ist ein Verfahren und eine Vorrichtung zur Messung der Schichtdicke von teilerstarrten Schmelzen bekannt, bei welchem die jeweilige Schichtdicke des schmelzflüssigen bzw. teilerstarrten Metalls mittels bereits vorhandener elektromagnetischer Rührspulen gemessen wird, indem das von den oberhalb der Schmelze angeordneten Rührspulen eingeprägte Magnetfeld von unterhalb der Schmelze angeordneten Sensoren aufgenommen wird und aus dem von den Sensoren aufgenommenen Messsignal auf die jeweiligen Schichtdicken geschlossen werden kann.

Aus der EP 0 150 670 A2 sind ein Verfahren und eine Vorrichtung zum Bestimmen und Regeln eines Niveaus einer Metallschmelze bekannt, wobei die Vorrichtung eine Messspule umfasst, welche zur Erzeugung von Wirbelströmen in der Metallschmelze mit einem Wechselstrom versorgt wird und welche die Größe der in der Metallschmelze erzeugten Wirbelströme misst, und wobei Ist-Werte der Größe der in der Metallschmelze erzeugten Wirbelströme mit Soll-Werten verglichen werden, um eine Durchflussmenge an Metallschmelze in eine Gießform zu regeln.

Aus der GB 2 021 782 A ist eine Vorrichtung zum Messen einer Höhe eines in einer Gießform enthaltenen Metallschmelze bekannt, wobei die Vorrichtung eine Messspule umfasst, welche ein magnetisches Wechselfeld erzeugt, wodurch in der Metallschmelze Wirbelströme erzeugt werden, deren jeweilige Stärke mittels der Messspule erfasst wird.

Die bekannten Verfahren zur Schichtdickenmessung der Schmelze verwenden sämtlich zusätzliche Sensoren, welche zur Messung von Magnetfeldern oder Strahlungssignalen dienen.

### DETAILLIERTE BESCHREIBUNG

Aufgabe der vorliegenden Erfindung ist es daher, ein Verfahren zum Messen der Schichtdicke einer metallischen Schmelze oder eines teilerstarrten Metalls insbesondere bei der Verwendung in einem kontinuierlichen Bandgießverfahren anzugeben, welches einen einfacheren Messaufbau zugrunde legt.

Diese Aufgabe wird mittels des Verfahrens zur Bestimmung des Höhenprofils einer Schmelze in einer Horizontalgießmaschine, insbesondere einer Bandgießmaschine, gemäß Anspruch 1 gelöst. Dabei weist die Horizontalgießmaschine mindestens eine Magnetspule zur Erzeugung eines Rührfeldes und/oder eines Transportfeldes zum Rühren und/oder Transportieren der Schmelze auf. Erfindungsgemäß werden mit der mindestens einen Magnetspule Wirbelströme in die Schmelze eingeprägt und das Höhenprofil der Schmelze wird mittels der mindestens einen Magnetspule gemessen.

Durch die Verwendung der bereits vorhandenen Rührspulen bzw. Transportspulen in dem Gießverfahren für die Messung des Höhenprofils der Schmelze bzw. des teilerstarrten Metalls kann auf den Einbau zusätzlicher Sensoren verzichtet werden, so dass sich hier ein einfacherer Aufbau des für das Messverfahren notwendigen Sensoraufbaus ergibt. Auf diese Weise kann das Verfahren entsprechend schnell realisiert werden, ohne irgendwelche Umbauten an den relevanten Teilen der Gießmaschine durchführen zu müssen.

Die Messung wird dabei mittels der bereits vorhandenen Magnetspule auf Grundlage der Wirbelstromprüfung bzw. Wirbelstrommessung durchgeführt ("Eddy Current Messung"). Das Prinzip der Wirbelstromprüfung ist prinzipiell bekannt und dient beispielsweise der zerstörungsfreien Materialprüfung und Materialcharakterisierung. Wirbelströme werden in ausgedehnten elektrischen Leitern erzeugt, wenn diese elektrischen Leiter in einem sich zeitlich ändernden Magnetfeld vorliegen, oder sich der elektrische Leiter in einem inhomogenen Magnetfeld bewegt.

Gemäß der Lenzschen Regel wird durch eine Änderung des magnetischen Flusses durch eine Leiterschleife eine Spannung induziert, wobei der durch die induzierte Spannung im Leiter fließende Strom seinerseits wiederum ein Magnetfeld erzeugt, welches der Änderung des magnetischen Flusses entgegenwirkt. Entsprechend wird der ursprünglich aufgebrachte magnetische Fluss, welcher den Wirbelstrom in dem elektrischen Leiter induziert, durch das gemäß der Lenzschen Regel entgegenwirkende magnetische Feld abgeschwächt. Dieser Effekt wird auch als Selbstinduktion bezeichnet. Hieraus ergibt sich, dass unterschiedliche Möglichkeiten der Messung des Wechselstromfeldes existieren. Im Stand der Technik war vorgeschlagen worden, das durch die Wirbelströme erzeugte Magnetfeld mittels eines externen Sensors zu messen.

Die vorliegende Erfindung hat sich jedoch zur Aufgabe gestellt, einen besonders einfachen Aufbau zu realisieren und daher auch auf weitere externe Sensoren zu verzichten. Entsprechend kann auch die als Rührspule bzw. Transportspule bereits vorgesehene Spule direkt zur Messung des Wirbelstroms verwendet werden. Hierzu ist noch einmal zu berücksichtigen, dass der von der Spule in die metallische Schmelze eingeprägte magnetische Fluss in der metallischen Schmelze einen Wirbelstrom induziert, welcher seinerseits ein Magnetfeld erzeugt, welches gemäß der Lenzschen Regel dem magnetischen Fluss der Spule entgegengesetzt ist. Entsprechend ergibt sich auch in der das Wirbelstromfeld aufprägenden Magnetspule eine Flussänderung aufgrund des durch den eingeprägten Wirbelstrom induzierten Gegenfeldes.

Werden nun entweder der Strom oder die Spannung in der Spule konstant gehalten, so kann durch Messung der jeweils anderen Komponente, also der Spannung oder des Stromes jeweils eine Variation des magnetischen Flusses in der Magnetspule und damit des Gegenfeldes gemessen werden.

Hierbei ist weiterhin zu beachten, dass Änderungen in der Füllhöhe der metallischen Schmelze bzw. des teilerstarrten Metalls entsprechend einen unterschiedlichen Abstand zwischen der Spulenunterseite der bereits vorhandenen Rührspule bzw. Transportspule und der Oberfläche der jeweiligen metallischen Schmelze bzw. des teilerstarrten Metalls ergeben. Aufgrund dieser Schwankungen der Füllhöhe ergibt sich entsprechend ein unterschiedlicher Abstand und damit eine Änderung der Induktivität des Wirbelstromes bzw. des aufgeprägten Gegenfeldes, so dass die entsprechende Änderung des magnetischen Flusses in der Magnetspule unterschiedlich ausfällt, je nach Abstand zwischen Spulenunterseite und Schmelzenoberfläche.

Hieraus lässt sich ein Messverfahren darauf basieren, dass sich in der Spule bei fest eingeprägtem Spulenstrom, also konstant aufgebrachtem magnetischem Fluss, die Spannung proportional zum durch den Wirbelstrom aufgeprägten Gegenfeld verändert. Hieraus kann einfach die Variation des Oberflächenprofils abgeleitet werden.

Da sich die Rührspulen bzw. Transportspulen typischer Weise über die gesamte Breite der jeweiligen Gießbahn bzw. über die gesamte Produktbreite hinweg erstrecken, kann durch Auswerten einer jeden Spule ein relativ genaues Oberflächenprofil erstellt werden. Die Ortsauflösung hängt dabei von der Anzahl und dem Abstand der sich quer zur Transportrichtung über die Produktbreite hinweg erstreckenden Anzahl von Einzelspulen ab, welche die Rührspule oder die Transportspule ausbilden. Durch die Auswertung einer jeden einzelnen Spule kann so über die Breite des Produkts hinweg eine Profilmessung erfolgen, welche zur Regelung des Massenstromes ebenso verwendet werden kann, wie für die Regelung der Transport- bzw. Rührspulenströme. Insbesondere kann bei einem von den Vorgaben abweichenden Profil des Produktes durch Regelung des Massenstroms und/oder durch Regelung der Spulenströme das gewünschte Profil angenähert werden.

Ein weiterer Vorteil ergibt sich daraus, dass die Profilmessung exakt an der Position stattfindet, an der sie mittels der Rührspulen bzw. der Transportspulen beeinflusst werden kann. Hieraus kann eine direkte, effiziente und zeitnahe bzw. Echtzeitmessung des Profils und der über die Rührspulen- bzw. Transportspulen vorgenommenen Profilverteilung durchgeführt werden. Entsprechend tritt eine hohe Totzeit, wie sie bei alternativen Messverfahren vorkommen kann, oder der Einsatz eines weiteren oder alternativen Messsystems nicht auf.

Mit anderen Worten können relevante Prozessgrößen, nämlich die Profilverteilung des Produktes, über die Nutzung bereits vorhandener Einrichtungen, nämlich der Rührspulen und/oder der Transportspulen, ermittelt werden. Hieraus ergibt sich ein effizientes Messverfahren und Messsystem, welches ohne bauliche Eingriffe in eine bestehende Gießlinie durchgeführt werden kann. Lediglich die Auswertelektronik muss ergänzt werden.

Durch das mittels des beschriebenen Verfahrens durchführbare Erkennen und Messen von Gießdicke und Profil kann zeitnah und großflächig über die Gießbreite hinweg die Erkennung erfolgen und entsprechend kann der gesamte Gießprozess regelungstechnisch direkt in den gewünschten Parameterbereichen beeinflusst werden.

Mittels des bereits vorhandenen elektromagnetischen Systems zum Rühren oder zum Transportieren der Schmelze, welches eine oder typischerweise eine Mehrzahl von Spulen aufweist, die sich über die Gießbreite erstrecken, kann entsprechend lokal, insbesondere im Bereich einer jeden Spule, die Änderung des Füllstandes bzw. das Profil nach dem Wirbelstromprinzip (Eddy Current Prinzip), also dem elektromagnetischen Effekt bei einem veränderlichen Magnetfeld gemessen werden. Entsprechend gibt das Messsignal Auskunft über stationäre oder instationäre Füllstandszustände, die durch die Anordnung der Spulen über die Gießbreite hinweg entsprechend über die gesamte Breite des zu gießenden Produktes bestimmt werden können. Hierdurch wird die Regelung des Massenstroms, beispielsweise über Ansteuerung des Stellorganes des metallurgischen Gefäßes in Echtzeit möglich. Entsprechend lässt sich das ursprünglich zur Optimierung der Verteilung der Schmelze erdachte elektromagnetische System, welches als Rührspule oder Transportspule bezeichnet wird, zusätzlich auch zur Messung lokaler Dickenänderungen und Profiländerungen der Schmelze nutzen, ohne dass bauliche Eingriffe notwendig sind.

Die verwendeten Spulen können als Block gewickelte Spulen vorgesehen sein, welche mehrere Lagen oder mehrere Windungen je Lage aufweisen.

Die Auswertung der Messsignale bringt jedoch die Schwierigkeit mit sich, dass der magnetische Fluss durch die Magnetspule aufgrund mehrerer unterschiedlicher Ursachen verändert werden kann. Entsprechend müssen die Ursachen, welche nicht auf eine Füllstandsveränderung zurückzuführen sind, kompensiert werden. Dies lässt sich beispielsweise dadurch bewerkstelligen, dass die Anlage im füllstandsfreien Zustand kalibriert wird. Weiterhin kann eine Kennwertkurve aufgenommen werden, die sich aus bekannten, normierten bzw. kalibrierten Füllständen ergibt. Auf diese Weise kann die Füllstandsmessung mittels des beschriebenen Verfahrens noch weiter verfeinert und noch zuverlässiger gestaltet werden.

### KURZE BESCHREIBUNG DER FIGUREN

- Figur 1: zeigt eine schematische Querschnittsansicht durch ein gegossenes Produkt mit einem darüber angeordneten elektromagnetischen Querrührer;
- Figur 2: zeigt eine schematische Darstellung des Ersatzschaltbildes für eine einzelne Spule in Figur 1;
- Figur 3: zeigt schematisch eine Spule mit einem Blockwickel; und
- Figur 4: zeigt schematisch ein Blockschaltbild einer Vorrichtung zur Bestimmung der Füllstandshöhe.

### AUSFÜHRLICHE BESCHREIBUNG DER FIGUREN

Im Folgenden wird die vorliegende Offenbarung auf Grundlage der Zeichnungen der Figuren noch ausführlicher beschrieben werden. Hierbei werden gleiche Elemente in den Figuren mit gleichen Bezugszeichen versehen und teilweise wird auf wiederholte Beschreibung der jeweiligen Elemente verzichtet.

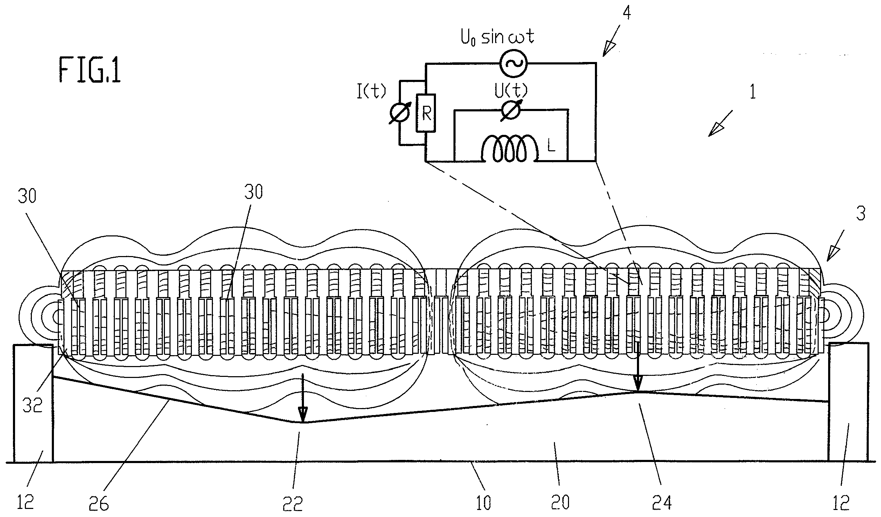

Figur 1 zeigt schematisch einen Querschnitt durch eine horizontale Gießmaschine 1 mit einem Transportband 10, welches sich in Richtung der Papierebene bewegt. Zwei Seitenbegrenzungen 12 zur Definition der Breite eines gegossenen Produktes 20 sind vorgesehen. Es ist erkennbar, dass das Produkt 20 aufgrund des Gießprozesses im Bereich 22 einen geringeren Füllstand bzw. eine geringere Dicke aufweist als im Bereich 24. Entsprechend ist das Profil der Oberfläche 26 des Produktes 20 in der Produktquerrichtung wellig.

Bei dem Gießprozess wird das schmelzflüssige Metall über ein metallurgisches Gefäß horizontal auf das Transportband 10 aufgebracht, wobei jedoch verfahrensbedingt typischerweise die Aufgabebreite der Schmelze auf das Transportband 10 geringer ist, als die zwischen den beiden seitlichen Begrenzungen 12 definierte Produktbreite. Entsprechend muss das schmelzflüssige Metall von der ursprünglichen Aufgabebreite auf die gewünschte Produktbreite fließen. In diesem Fließprozess kann es zu der in der Figur 1 schematisch gezeigten Welligkeit der Oberfläche bzw. des Profils der Oberfläche 26 des Produktes 20 kommen.

Um das Fließen des schmelzflüssigen Metalls des Produktes 20 derart zu unterstützen, dass eine gleichmäßige Höhenstruktur bzw. ein gleichmäßiges Profil der Oberfläche 26 über die gesamte Produktbreite hinweg erreicht wird, ist ein elektromagnetischer Querrührer 3 vorgesehen. Dieser elektromagnetische Querrührer 3 besteht aus einer Vielzahl von Spulen 30, die sich quer über das Transportband 10 und das darüber angeordnete schmelzflüssige Metall des Produktes 20 hinweg erstrecken. Durch das Hindurchleiten eines Stromes durch die jeweiligen Spulen 30 wird ein Magnetfeld induziert, welches dazu dient, das schmelzflüssige Metall in Querrichtung zum Transportband 10 so zu verteilen, dass der gewünschte Zustand einer quasi ebenen Produktoberfläche 26 erreicht werden kann.

Die erzeugten Felder können entsprechend als stationäres Feld oder als Wanderfeld ausgeprägt werden, um die entsprechende Bewegung des schmelzflüssigen Metalls zu erreichen. Die Anordnung der Spulen 30, so wie sie schematisch in Figur 1 gezeigt ist, ist nicht zwingend. Die Spulen können auch orthogonal zu der in Figur 1 gezeigten Anordnung angeordnet sein, um senkrechte Magnetfelder zu erzeugen, welche ebenfalls zum Materialtransport in Querrichtung oder überhaupt zum weiteren Durchmischen und Homogenisieren des schmelzflüssigen Metalls dienen können.

Unabhängig von der Beaufschlagung der Spulen mit dem Spulenstrom, welcher zur Förderung des schmelzflüssigen Metalls bzw. zum Rühren dieses Metalls dienen, können die Spulen mit einem davon unabhängigen fest eingeprägten Strom beaufschlagt werden, welcher dazu dient, in dem schmelzflüssigen Metall des Produktes 20 einen Wirbelstrom zu induzieren. Hierzu ist in der Figur 1 schematisch die Auswertvorrichtung 4 als Schaltbild eingezeichnet, welche für jede einzelne Spule separat vorgesehen ist.

Wie aus dem Schaltbild der Auswertvorrichtung 4 sofort zu erkennen ist, wird ein Wechselstrom auf die jeweilige Spule aufmoduliert, wobei entweder der Strom I(t) oder die Spannung U(t) konstant gehalten wird und der jeweils andere Wert gemessen wird. Aufgrund des über den Wechselstrom in die metallische Schmelze 20 eingeprägten Wirbelstroms wird aufgrund der Lenzschen Regel ein entsprechendes Gegenfeld induziert, welches in der jeweiligen individuellen Spule dazu führt, dass das durch den Wechselstrom erzeugte Magnetfeld geschwächt wird, da das vom Wirbelstrom induzierte Magnetfeld dem Ausgangsmagnetfeld entgegengesetzt ist. Entsprechend kann, bei erzwungenem Spulenstrom I(t) der Verlauf der Spannung U(t) gemessen werden, wobei der Verlauf der Spannung, abgesehen selbstverständlich von der periodischen Wechselspannung, als Maß für die von dem Produkt 20 erzeugte Gegeninduktivität, und damit auch für den Abstand zwischen der Unterkante 32 der jeweiligen Spule 30 und der senkrecht gegenüberliegenden Oberfläche 26 des Produktes 20 verwendet wird.

Entsprechend kann auch die Spannung fest aufgeprägt werden, so dass der Maximalwert der Spannung U(t) fest ist, und stattdessen der Strom I(t) gemessen wird. Auch hier wird durch die Änderung der Gegeninduktion des in das schmelzflüssige Metall eingeprägten Wirbelstromfeldes ein zum Füllstand unterhalb der jeweiligen Spule 30 proportionaler Verlauf des Stromes messbar.

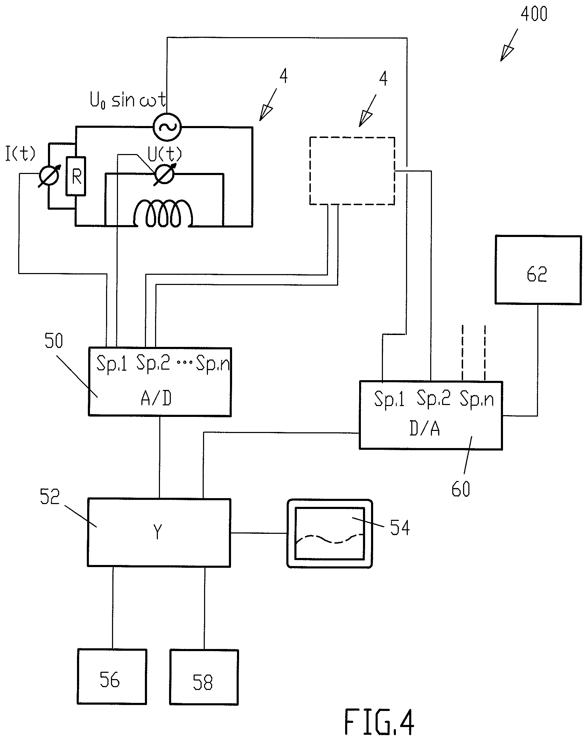

Aus dem jeweiligen Verlauf der Füllstände bzw. der Abstände zwischen der Unterkante 32 der jeweiligen Spule 30 und der Oberfläche 26 kann entsprechend ein vollständiges Oberflächenprofil der Oberfläche 26 des Produktes 20 über die gesamte Produktbreite hinweg erhalten werden. Die entsprechende Auswertung übernimmt eine entsprechende Auswertvorrichtung, wie sie in Figur 4 schematisch dargestellt ist.

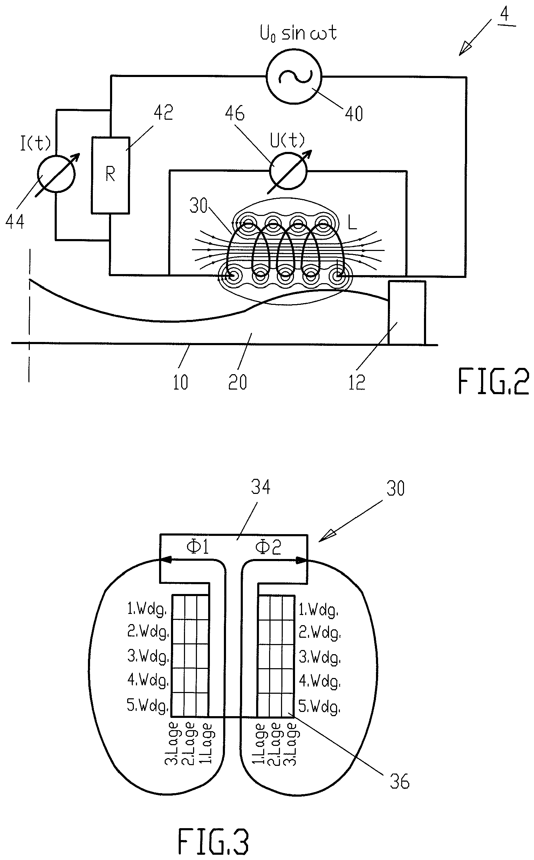

Figur 2 zeigt schematisch noch einmal das Schaltbild einer einzelnen Spule 30, welche an einer Wechselstromquelle 40 betrieben wird. Die Summe der elektrischen Widerstände ist schematisch als Widerstand 42 eingezeichnet, die Strommessung schematisch bei 44 angegeben sowie die Spannungsmessung schematisch bei 46. Die Spannungsmessung 46 findet parallel über die Spule 30 statt, um die Wechselwirkung zwischen dem in die Schmelze 20 eingeprägten Wirbelstromfeld und dem hieraus resultierenden Gegenfeld und dem durch die Spule 30 erzeugten Magnetfeld zu berücksichtigen. Der Strom, der die Spule 30 durchfließt, ist dabei erzwungen, also fest in die Spule 30 eingeprägt, unabhängig von dem magnetischen Fluss in der Spule, so dass entsprechend die Spannung, die bei 46 gemessen wird, mit dem die Spule 30 durchfließenden magnetischen Fluss variiert.

Figur 3 zeigt schematisch eine Spule 30 mit einem Spulenkern 34 und unterschiedlichen Wicklungen 36. Die Spule gemäß Figur 3 weist unterschiedliche Windungen und unterschiedliche Lagen auf. Es handelt sich hierbei um eine so genannte Blockwickelung, welche aus mehreren Lagen und mehreren Windungen je Lage aufgebaut ist.

Figur 4 zeit schematisch den Aufbau einer Auswertungsvorrichtung 400, mittels welcher das Höhenprofil des Produktes bestimmt werden kann. Die Messdaten des Stromes sowie der Spannung gemäß dem Schaltbild 4 werden für sämtliche vorhandene Spulen 30 einer A/D-Wandlereinheit 50 zugeführt. Ein entsprechender Mikroprozessor 52 wertet die entsprechenden Signale, die von der A/D-Wandlereinheit 50 stammen, aus. Aus den Höhendaten der einzelnen Spulen kann dann ein Höhenprofil über die gesamte Breite des Produktes 20 hinweg angegeben werden, welches sich anschließend auf einem Bildschirm 54 darstellen lässt.

Hierzu können von dem Mikroprozessor 52 weiterhin Daten aus einer Datenbank 56 abgerufen werden, wobei in der Datenbank Kennwerte für die jeweiligen Spulen im füllstandsfreien Zustand der Anlage sowie zu unterschiedlichen, vorher kalibrierten Füllzuständen, hinterlegt sind. Auf diese Weise kann eine Kalibrierung für jede einzelne Spule separat vorgenommen werden und die jeweiligen Füllstandshöhen für die jeweiligen individuellen Spulen 30 können auf diese Weise genauer bestimmt werden.

Nach Auswertung des tatsächlichen Höhenprofils in Echtzeit kann dieses Profil auch zur Regelung des Massenstroms der Schmelze verwendet werden. Hierzu kann aus einer weitere Datenbank 58, in welcher unterschiedliche Produktprofile abgespeichert sind, ein Produktprofil ausgewählt werden und dieses mit dem gemessenen Höhenprofil verglichen werden. Durch Differenzbildung zwischen dem gemessenen Höhenprofil und dem gewünschten Produktprofil kann ein Regelprofil erstellt werden. Ein entsprechender Regelkreislauf kann dann, nachdem von dem Mikroprozessor 52 durch Differenzbildung das entsprechende quasi gegenphasige Produktprofil Magnetfeldprofil berechnet wurde, über den D/A Wandler 60 für die jeweiligen Spulen ein Spulenstrom derart eingeprägt werden, dass das entsprechende Magnetfeld die Schmelze 20 in Richtung des gewünschten Höhenprofils bewegt.

Selbstverständlich sind andere Regelmechanismen, insbesondere auch analoge Regelmechanismen hier denkbar. Eine Digitalisierung der Daten ist nicht unbedingt notwendig, es könnte auch ein analoger Regelkreis für jede einzelne Spule oder für Spulengruppen aufgebaut werden.

Weiterhin ist offensichtlich, dass der auf die jeweilige Spule aufgeprägte Strom nicht ein separater Messstrom sein muss, sondern der von der Spule für ihre Tätigkeit als Rührspule verwendete Strom gleichzeitig als Messstrom verwendet wird. Entsprechend muss in der Auswerteeinheit nicht nur die (sich verändernde) Spannung einbezogen werden, sondern ebenfalls der gesteuerte, aber fest eingeprägte Strom.

Der D/A-Wandler kann, neben der Steuerung des durch die Spulen 30 aufgeprägten Transport- bzw. Rührfeldes ebenso den Massenfluss der Schmelze durch Ansteuerung eines Stellorgans 62 des metallurgischen Gefäßes eingreifen.

### BEZUGSZEICHENLISTE

- 1: Gießmaschine
- 10: Transportband
- 12: seitliche Begrenzung
- 20: metallische Schmelze
- 22: Bereich geringer Füllhöhe
- 24: Bereich großer Füllhöhe
- 26: Schmelzenoberfläche
- 3: Transportspule
- 30: Magnetspule
- 32: Spulenunterseite
- 34: Spulenkern
- 36: Spulenwicklung
- 4: Auswertungsschaltung
- 40: Stromquelle
- 42: Widerstand
- 44: Strommessung
- 46: Spannungsmessung
- 400: Auswertungsvorrichtung
- 50: A/D Wandler
- 52: Mikroprozessor
- 54: Bildschirm
- 56: Datenbank für Referenzmessdaten
- 58: Datenbank für Produktprofildaten
- 60: A/D Wandler
- 62: Stellvorrichtung Massenstrom

## Patentansprüche

1. Verfahren zur Bestimmung des Höhenprofils einer Schmelze (20) in einer Horizontalgießmaschine (1), insbesondere einer Bandgießmaschine, wobei die Horizontalgießmaschine mindestens eine Magnetspule (30) zur Erzeugung eines Rührfeldes und/oder eines Transportfeldes zum Rühren und/oder Transportieren der Schmelze (20) aufweist,
**dadurch gekennzeichnet, dass**
mit der mindestens einen Magnetspule (30) Wirbelströme in die Schmelze (20) eingeprägt werden und das Höhenprofil der Schmelze (20) mittels der mindestens einen Magnetspule (30) gemessen wird.

2. Verfahren gemäß Anspruch 1, wobei die mindestens eine Magnetspule (30) mit einem fest eingeprägten Strom beaufschlagt wird und aus der Spannungsvariation das Höhenprofil ermittelt wird.

3. Verfahren gemäß Anspruch 1, wobei die mindestens eine Magnetspule (30) mit einer fest eingeprägten Spannung beaufschlagt wird und aus der Stromvariation das Höhenprofil ermittelt wird.

4. Verfahren gemäß einem der vorstehenden Ansprüche, wobei die Höhenmessung mittels einer Mehrzahl von Magnetspulen (30) durchgeführt wird, die an unterschiedlichen Orten über die Produktbreite hinweg angeordnet sind und das Höhenprofil der Schmelze (20) durch Auswertung der lokalen Höhenangaben ortsaufgelöst ermittelt wird.

5. Verfahren gemäß einem der vorstehenden Ansprüche, wobei in der mindestens einen Magnetspule (30) die induktivitätsabhängige Spannung gemessen wird.

6. Verfahren gemäß einem der vorstehenden Ansprüche, wobei der Massenstrom der Schmelze (20) einer horizontalen Gießmaschine auf Grundlage des ermittelten Höhenprofils geregelt wird.

7. Verfahren gemäß einem der vorstehenden Ansprüche, wobei die Bestimmung des Höhenprofils auf Grundlage einer Kalibrierung im füllstandsfreien Zustand und/oder einer Kalibrierung mit vorbekannten Füllhöhen durchgeführt wird.

8. Verfahren gemäß einem der vorstehenden Ansprüche, wobei die ermittelten Werte mit in einer Datenbank (56) abgelegten Werten verglichen werden.

9. Verfahren gemäß einem der vorstehenden Ansprüche, wobei das ermittelte Höhenprofil zur Regelung eines Magnetfeldes eines Querrührers (3), zur Regelung eines Transportfeldes oder zur Regelung eines Rührfeldes verwendet wird.

10. Vorrichtung zur Bestimmung des Höhenprofils einer Schmelze (20) in einer Horizontalgießmaschine (1), umfassend mindestens eine Magnetspule (30) zur Erzeugung eines Rührfeldes und/oder eines Transportfeldes zum Rühren und/oder Transportieren der Schmelze (20),
**dadurch gekennzeichnet,**
**dass** die mindestens eine Magnetspule (30) mit einer Messvorrichtung (4) zum Messen eines wirbelstrominduszierten Gegenfeldes verbunden ist, wobei die Messvorrichtung (4) zum Messen des wirbelstrominduzierten Gegenfeldes über die mindestens eine Magnetspule (30) eingerichtet ist.

11. Vorrichtung gemäß Anspruch 10, wobei die Messvorrichtung (4) eine Strommessung bei fest eingeprägter Spulenspannung oder eine Spannungsmessung bei fest eingeprägtem Spulenstrom umfasst.

12. Vorrichtung gemäß Anspruch 10 oder 11, wobei eine Auswertungseinheit (400), welche auf Grundlage der gemessenen wirbelstrominduzierten Werte über mehrere Spulen (30) hinweg, ein Höhenprofil der Schmelze (20) über die gesamte Produktbreite hinweg angibt, vorgesehen ist.

## Claims

1. Method of determining the height profile of a melt (20) in a horizontal casting machine (1), particularly a strip casting machine, wherein the horizontal casting machine comprises at least one magnetic coil (30) for generating an agitation field and/or a transport field for agitation and/or transport of the melt (20),
**characterised in that**
eddy currents are impressed in the melt (20) by the at least one magnetic coil (30) and the height profile of the melt (20) is measured by means of the at least one magnetic coil (30).

2. Method according to claim 1, wherein the at least one magnetic coil (30) is acted on by a fixedly impressed current and the height profile is determined from the voltage variation.

3. Method according to claim 1, wherein the at least one magnetic coil (30) is acted on by a fixedly impressed current and the height profile is determined from the current variation.

4. Method according to any one of the preceding claims, wherein the measurement of height is carried out by means of a plurality of magnetic coils (30), which are arranged at different locations over the product width, and the height profile of the melt (20) is determined by evaluation of the local height data with positional resolution.

5. Method according to any one of the preceding claims, wherein the inductivity-dependent voltage is measured in the at least one magnetic coil (30).

6. Method according to any one of the preceding claims, wherein the mass flow of the melt (20) of a horizontal casting machine is regulated on the basis of the determined height profile.

7. Method according to any one of the preceding claims, wherein the determination of the height profile is carried out on the basis of a calibration in the state free of filling and/or a calibration with previously known filling heights.

8. Method according to any one of the preceding claims, wherein the determined values are compared with values filed in a databank (56).

9. Method according to any one of the preceding claims, wherein the determined height profile is used for regulation of a magnetic field of a transverse agitator (3), for regulation of a transport field or for regulation of an agitation field.

10. Device for determining the height profile of a melt (20) in a horizontal casting machine (1), comprising at least one magnetic coil (30) for generating an agitation field and/or a transport field for agitation and/or transport of the melt (20),
**characterised in that**
the at least one magnetic coil (30) is connected with a measuring device (4) for measuring an opposing field induced by eddy current, wherein the measuring device (4) for measuring the opposing field induced by eddy current is arranged above the at least one magnetic coil (30).

11. Device according to claim 10, wherein the measuring device (4) comprises a current measurement in the case of a fixedly impressed coil voltage or a voltage measurement in the case of a fixedly impressed coil current.

12. Device according to claim 10 or 11, wherein an evaluating unit (400), which indicates a height profile of the melt (20) over the entire product width on the basis of the measured values, which are induced by eddy current, by way of several coils (30), is provided.

## Revendications

1. Procédé pour la détermination du profil vertical d'une masse fondue (20) dans une machine de coulée continue horizontale (1), en particulier d'une machine de coulée continue en bande, la machine de coulée continue horizontale présentant au moins une bobine magnétique (30) pour générer un champ d'agitation et/ou un champ de transport pour l'agitation et/ou le transport de la masse fondue (20),
**caractérisé en ce que**, avec ladite au moins une bobine magnétique (30), on imprime des courants parasites dans la masse fondue (20) et on mesure le profil vertical de la masse fondue (20) au moyen de ladite au moins une bobine magnétique (30).

2. Procédé selon la revendication 1, dans lequel ladite au moins une bobine magnétique (30) est sollicitée avec un courant imprimé de manière fixe et à partir de la variation de la tension, on détermine le profil vertical.

3. Procédé selon la revendication 1, dans lequel ladite au moins une bobine magnétique (30) est sollicitée avec une tension imprimée de manière fixe et on détermine le profil vertical à partir de la variation de l'intensité.

4. Procédé selon l'une quelconque des revendications précédentes, dans lequel la mesure de la hauteur est mise en oeuvre au moyen d'une multitude de bobines magnétiques (30) qui sont disposées à différents endroits sur toute la largeur du produit et on détermine via une résolution spatiale le profil vertical de la masse fondue (20) par l'évaluation des indications de hauteur locales.

5. Procédé selon l'une quelconque des revendications précédentes, dans lequel on mesure, dans ladite au moins une bobine magnétique (30), la tension qui dépend de l'inductance.

6. Procédé selon l'une quelconque des revendications précédentes, dans lequel on règle le débit massique de la masse fondue (20) d'une machine de coulée continue horizontale sur base du profil vertical déterminé.

7. Procédé selon l'une quelconque des revendications précédentes, dans lequel on effectue la détermination du profil vertical sur base d'un étalonnage à l'état exempt de niveau de remplissage et/ou d'un étalonnage avec des hauteurs de remplissage connues par avance.

8. Procédé selon l'une quelconque des revendications précédentes, dans lequel on compare les valeurs déterminées à des valeurs déposées dans une banque de données (56).

9. Procédé selon l'une quelconque des revendications précédentes, dans lequel on utilise le profil vertical déterminé pour le réglage d'un champ magnétique d'un agitateur transversal (3), pour le réglage d'un champ de transport ou pour le réglage d'un champ d'agitation.

10. Le dispositif pour la détermination du profil vertical d'une masse fondue (20) dans une machine de coulée continue horizontale (1), comprenant au moins une bobine magnétique (30) pour générer un champ d'agitation et/ou un champ de transport pour l'agitation et/ou le transport de la masse fondue (20), **caractérisé en ce que** ladite au moins une bobine magnétique (30) est reliée à un dispositif de mesure (4) pour la mesure d'un champ inverse induit par un courant parasite, le dispositif de mesure (4) étant conçu pour la mesure du champ inverse induit par un courant parasite via ladite au moins une bobine magnétique (30).

11. Dispositif selon la revendication 10, dans lequel le dispositif de mesure (4) comprend une mesure de l'intensité dans le cas d'une tension de bobine imprimée de manière fixe ou une mesure de la tension dans le cas d'un courant de bobine imprimé de manière fixe.

12. Dispositif selon la revendication 10 ou 11, dans lequel on prévoit une unité d'évaluation (400) qui, sur base des valeurs mesurées induites par un courant parasite via toute une série de bobines (30), indique un profil vertical de la masse fondue (20) sur toute la largeur du produit.
